# EUROPEAN PATENT APPLICATION

(11) **EP 4 835 188 A1**
(43) Date of publication of application: **04.11.2026**
(21) Application number: 24920714.3
(22) Date of filing: 15.11.2024
(51) Int. Cl.: D06F 37/22, D06F 37/26, D06F 37/04, F16F 15/06

(54) **LAUNDRY TREATMENT APPARATUS**

(30) Priority: 24.01.2024 KR 20240011189
(71) Applicant: LG Electronics Inc., Yeongdeungpo-gu Seoul 07336 (KR)
(72) Inventor: LEE, Sanghoon, Seoul 08592 (KR); JO, Mingyu, Seoul 08592 (KR); KIM, Beomjun, Seoul 08592 (KR)
(74) Representative: Schornack, Oliver
(86) International application number: PCT/KR2024/018062
(87) International publication number: WO 2025/159299

(57) **Abstract**

The laundry treatment apparatus of the present embodiment includes: a cabinet; a tub disposed inside the cabinet; a spring connecting the cabinet and the tub such that the tub is supported by the cabinet; and a damping unit connecting the cabinet and the spring to reduce vibration.

## Description

### [Technical Field]

This specification relates to a laundry treatment apparatus.

### [Background Art]

Generally, a laundry treatment apparatus refers collectively to a device that treats laundry by applying physical or chemical action to the laundry, and includes a washing machine that removes contamination adhering to laundry, a dehydrator that dehydrates laundry by rotating a laundry tub containing the laundry at high speed, and a dryer that dries wet laundry by applying cold air or hot air into a laundry tub, among others.

This laundry treatment apparatus may include a tub accommodated in a suspended form inside a cabinet, and a drum rotated within the tub while accommodating laundry (or fabric) therein.

Since vibration is generated during the rotation of the drum, the laundry treatment apparatus is provided with a device for damping vibration of the tub.

Prior Art Document 1, Korean Patent Application Publication No. 2001-0037669, discloses a vibration prevention device for a drum washing machine.

In the vibration prevention device of Prior Art Document 1, a spring and a damping means are provided at an upper side of an outer tub, and a damper is provided at a lower side of the outer tub.

In the case of Prior Art Document 1, although damping of vertical vibration and forward-backward vibration is possible, since one side of the damping means is connected to the outer tub and the other side is connected to the outer case, there is a disadvantage in that vibration is transmitted to the outer case as is.

Prior Art Document 2, Chinese Patent Application Publication No. CN109477277, discloses a laundry treatment apparatus.

The laundry treatment apparatus of Prior Art Document 2 includes a casing, an alkali liquid tub movably disposed within the casing, and a laundry drum rotatably disposed within the alkali liquid tub about a transverse axis extending across a longitudinal axis of the laundry treatment apparatus.

The alkali liquid tub is supported with respect to the case through only one damping unit having constant damping characteristics, by being disposed to be circumferentially staggered with respect to an adjacent damping unit about the transverse axis, through two adjacent damping units spaced apart about the transverse axis.

In the case of Prior Art Document 2, although a structure of a damper offset in a rotational axis direction is described, it fails to present installation conditions for an effective additional damper having various angles, and there is a problem in that the vibration reduction effect in the laundry treatment apparatus is inferior.

### [Disclosure]

### [Technical Problem]

One embodiment provides a laundry treatment apparatus capable of effectively reducing vibration generated in various directions during an operating process.

Optionally or additionally, one embodiment provides a laundry treatment apparatus in which transmission of vibration to a cabinet is reduced during a vibration reduction process of a damping unit.

Optionally or additionally, one embodiment provides a laundry treatment apparatus in which a position of a damping unit can be easily changed according to vibration characteristics.

### [Technical Solution]

A laundry treatment apparatus according to one aspect may include: a cabinet; a tub disposed inside the cabinet; a spring connecting the cabinet and the tub such that the tub is supported by the cabinet; and a damping unit connecting the cabinet and the spring to reduce vibration.

The tub may include a damping unit coupling portion to which the damping unit is coupled. The tub may include a spring coupling portion to which the spring is coupled.

The damping unit may include a first body connected to the damping unit coupling portion, and a second body movably connected to the first body and connected to the spring.

The damping unit coupling portion may be positioned higher than the spring coupling portion in the tub.

The laundry treatment apparatus may further include a first connector connecting the damping unit to the damping unit coupling portion.

The damping unit coupling portion may include a first wall extending from the tub, and a second wall and a third wall extending from the first wall.

The second wall and the third wall may be spaced apart from each other to form a space. The first connector may be coupled to the second wall and the third wall between the second wall and the third wall.

The first connector may be connected to the damping unit coupling portion so as to be rotatable about a first rotation center.

The damping unit may be connected to the first connector so as to be rotatable about a second rotation center.

The first connector may include a first portion connected to the damping unit coupling portion, and a second portion and a third portion extending from the first portion and spaced apart from each other.

The first body may include a first connector coupling portion rotatably coupled to the second portion and the third portion.

The laundry treatment apparatus may further include a second connector for connecting the damping unit to the spring.

The damping unit may be connected to the second connector so as to be rotatable about a third rotation center.

The spring may include a coiled portion in which a wire is wound a plurality of times, a first extension portion extending from one side of the coiled portion and coupled to the cabinet, and a second extension portion extending from the other side of the coiled portion and coupled to the spring coupling portion of the tub.

The second connector may be connected to one extension portion of the first extension portion and the second extension portion.

The second connector may be rotatably connected to the one extension portion, and may be movable in a longitudinal direction of the one extension portion while connected to the one extension portion.

The second connector may be rotatably connected to the one extension portion.

The laundry treatment apparatus may further include a movement restricting portion connected to the one extension portion and the second connector, so as to restrict movement of the second connector in the longitudinal direction of the one extension portion.

The second connector may include a connector body forming an accommodating space in which the one extension portion is accommodated.

The second connector may further include a guide slot for guiding the one extension portion into the accommodating space.

The second body of the damping unit may include a second connector coupling portion to be coupled to the second connector.

The second connector may include a first coupling portion and a second coupling portion extending from the connector body. The second connector coupling portion may be rotatably connected to the first coupling portion and the second coupling portion.

The tub may include a coupling mechanism provided with a plurality of coupling portions, and the damping unit may be coupled to one coupling portion among the plurality of coupling portions.

The tub may include a coupling mechanism provided with a plurality of coupling portions, and the damping unit may include a first damping unit coupled to one coupling portion among the plurality of coupling portions and to the spring, and a second damping unit coupled to another coupling portion among the plurality of coupling portions.

The tub may include a first coupling portion, and a second coupling portion spaced apart from the first coupling portion in a front-rear direction. The damping unit may include a first damping unit connected to the first coupling portion and the spring, and a second damping unit connected to the second coupling portion and the spring.

The laundry treatment apparatus may further include a lower damping unit connecting a base of the cabinet and a lower side of the tub.

### [Effect of the Invention]

According to one embodiment, there is an advantage in that vibration generated in various directions during an operating process can be effectively reduced.

According to one embodiment, there is an advantage in that transmission of vibration to the cabinet is reduced during a vibration reduction process of the damping unit.

According to one embodiment, there is an advantage in that a position of the damping unit can be easily changed according to vibration characteristics.

According to one embodiment, there is an advantage in that addition of the damping unit is easy according to vibration characteristics.

### [Description of Drawings]

FIG. 1 is a plan view of a laundry treatment apparatus according to a first embodiment.
FIG. 2 is a front view of the laundry treatment apparatus according to the first embodiment.
FIG. 3 is a view showing an installed state of a damping unit according to the first embodiment.
FIG. 4 is a view showing an upper structure of a tub according to the first embodiment.
FIG. 5(A) is a perspective view of a first connector according to the first embodiment, and FIG. 5(B) is an exploded perspective view of the first connector of the first embodiment.
FIG. 6(A) is a plan view of a first connector body according to the first embodiment, and FIG. 6(B) is a side view of the first connector body of the first embodiment.
FIG. 7 is a perspective view showing a spring, a second connector, and a second body according to the first embodiment.
FIG. 8(A) is a perspective view of a second connector of the first embodiment, and FIG. 8(B) is a plan view of the second connector of the present embodiment.
FIG. 9(A) is a view showing an example in which a second connector and a spring are coupled according to the first embodiment, and FIG. 9(B) is a view showing a modified example in which the second connector and the spring are coupled.
FIG. 10(A) is a view showing degrees of freedom of a damping unit in a state in which the damping unit according to the first embodiment is connected to a first coupling portion by a first connector.
FIG. 10(B) is a view showing degrees of freedom of the damping unit in a state in which the damping unit according to the first embodiment is connected to a spring by a second connector.
FIG. 11 is a view showing a state in which a damping unit according to a second embodiment is installed on a tub.
FIG. 12 is a plan view showing a state in which a first damping unit and a second damping unit according to a third embodiment are installed on a tub.
FIG. 13 is a view showing a state in which a first damping unit and a second damping unit are connected to a spring according to the third embodiment.
FIG. 14 is a view showing a state in which a movement restricting portion is connected to a second connector according to a fourth embodiment.
FIG. 15(A) is a view showing a movement restricting portion according to the fourth embodiment, and FIG. 15(B) is a cross-sectional view taken along line 15B-15B of FIG. 14.

### [Best Mode].

Hereinafter, some embodiments of the present invention will be described in detail with reference to exemplary drawings. In adding reference numerals to elements of each drawing, it should be noted that the same elements will have the same reference numerals as much as possible even though they are shown in different drawings. In addition, in describing the embodiments of the present invention, if it is determined that a detailed description of a related known configuration or function may obscure the understanding of the embodiments of the present invention, the detailed description thereof will be omitted.

In addition, in describing the elements of the embodiments of the present invention, terms such as first, second, A, B, (a), (b), etc. may be used. These terms are merely for distinguishing the elements from other elements, and the essence, order, or sequence of the elements is not limited by these terms. When an element is described as being "connected," "coupled," or "linked" to another element, the element may be directly connected, coupled, or linked to the other element, but it should be understood that another element may also be "connected," "coupled," or "linked" between each element.

In this specification, an upper portion of the tub may mean a portion positioned above a bisector when a height of the tub is bisected, or bisected in an up-down direction based on a center of gravity, and a lower portion of the tub may mean a portion positioned below the bisector.

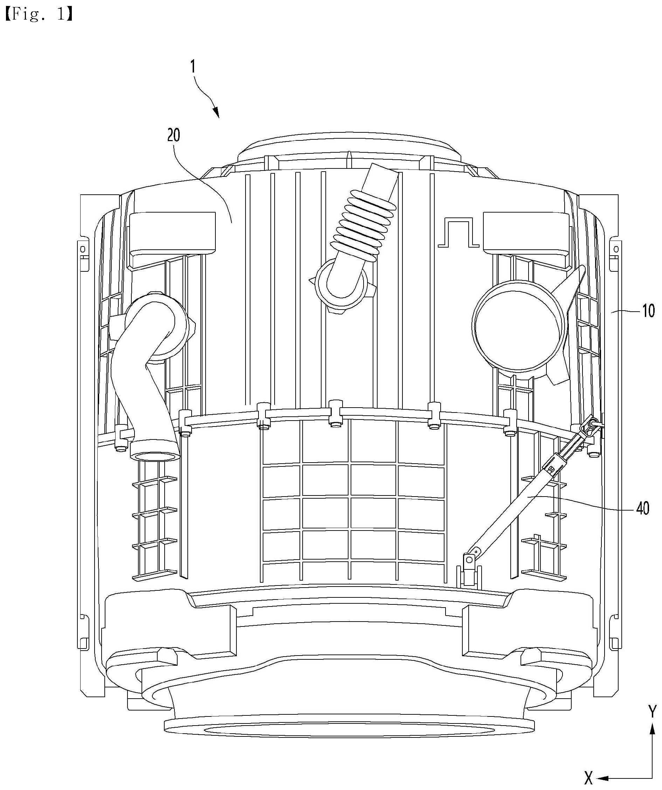

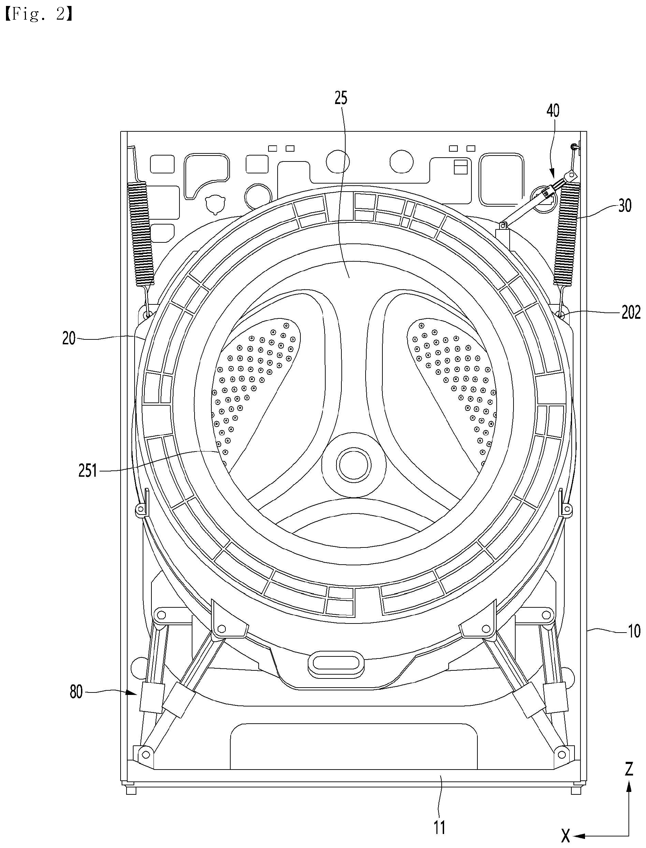

FIG. 1 is a plan view of a laundry treatment apparatus according to a first embodiment. FIG. 2 is a front view of the laundry treatment apparatus according to the first embodiment.

In FIGS. 1 and 2, as an example, a state in which a portion of a cabinet is removed is illustrated.

Referring to FIGS. 1 and 2, the laundry treatment apparatus 1 of the present embodiment may include a cabinet 10 forming an external appearance.

The cabinet 10 may be formed by a single member or may be formed by a combination of a plurality of members.

The laundry treatment apparatus 1 may further include a tub 20 disposed inside the cabinet 10. When the laundry treatment apparatus 1 is a washing machine, wash water may be accommodated in the tub 20.

The laundry treatment apparatus 1 may further include a drum 25 disposed inside the tub 20 and accommodating laundry therein. The drum 25 may be rotated by a driving unit (not shown). The drum 25 may include an opening 251. Laundry may be introduced into the drum 25 or withdrawn from the drum 25 through the opening 251. Although not shown, the opening 251 may be opened and closed by a door.

The laundry treatment apparatus 1 may further include a spring 30 for supporting the tub 20 on the cabinet 10. For example, a plurality of springs 30 may be connected to the cabinet 10 to support the tub 20.

Although not limiting, one spring among the plurality of springs 30 may be connected to an upper right side of the tub 20, and some other springs may be connected to an upper left side of the tub 20.

The laundry treatment apparatus 1 may further include a damping unit 40 connected to an upper portion of the tub 20.

The damping unit 40 may be connected to the upper portion of the tub 20 and one spring 30 to reduce vibration, including forward-backward direction vibration and left-right direction vibration, of the tub 20. The damping unit 40 may be referred to as an upper damping unit.

In this embodiment, an X-axis direction may be a left-right direction of the laundry treatment apparatus 1, a Y-axis direction may be a forward-backward direction of the laundry treatment apparatus 1, and a Z-axis direction may be an up-down direction of the laundry treatment apparatus 1.

The damping unit 40 may be disposed to cross at least two or more axes among the X-axis, the Y-axis, and the Z-axis.

For example, the damping unit 40 may be disposed to cross the X-axis, the Y-axis, and the Z-axis. One end and the other end of the damping unit 40 may be disposed to be spaced apart in the X-axis direction. One end and the other end of the damping unit 40 may be disposed to be spaced apart in the Y-axis direction. One end and the other end of the damping unit 40 may be disposed to be spaced apart in the Z-axis direction.

The laundry treatment apparatus 1 may further include a lower damping unit 80 connected to a lower portion of the tub 20. For example, a plurality of lower damping units 80 may be connected to the lower portion of the tub 20 and a base 11.

Although not limiting, one or more lower damping units 80 may be connected to a lower right side of the tub 20, and one or more lower damping units 80 may be connected to a lower left side of the tub 20.

In the case of this embodiment, vibration generated during the operation of the laundry treatment apparatus 1 may be reduced by the spring 30, the damping unit 40, and the lower damping unit 80.

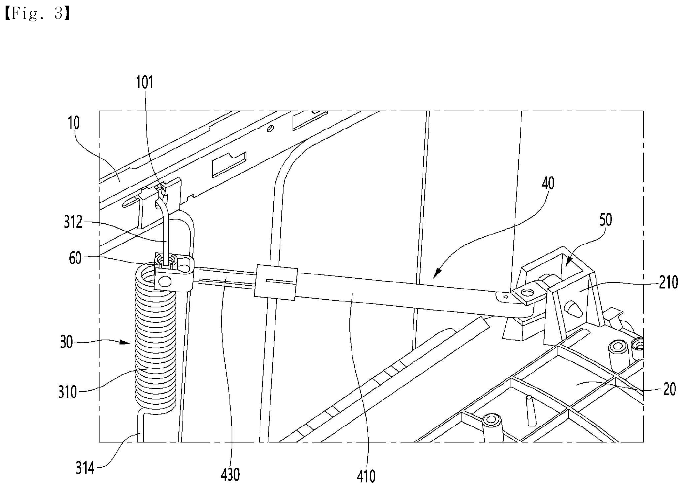

FIG. 3 is a view showing an installed state of a damping unit according to the first embodiment.

Referring to FIG. 3, one side of the damping unit 40 may be connected to a first coupling portion 210 provided in the tub 20. The other side of the damping unit 40 may be connected to the spring 30 coupled to the cabinet 10.

One side and the other side of the damping unit 40 may be positioned at different heights.

The damping unit 40 may include a first body 410 and a second body 430 movable relative to the first body 410.

In the case of this embodiment, the damping unit 40 generates a damping force by relative movement of the first body 410 and the second body 430, but the structure of the damping unit 40 is not limited thereto.

The damping unit 40 may be movably connected to the first coupling portion 210 by a first connector 50.

The damping unit 40 may be movably connected to the spring 30 by a second connector 60.

For example, the first connector 50 may be movably connected to the first coupling portion 210. The first body 410 may be movably connected to the first connector 50.

The second connector 60 may be movably connected to the spring 30. The second body 430 may be movably connected to the second connector 60.

The cabinet 10 may include a spring coupling portion 101 to which the spring 30 is coupled.

The spring 30 may be, for example, a coil spring.

The spring 30 may include a coiled portion 310 in which a wire is wound a plurality of times, a first extension portion 312 extending from one side of the coiled portion 310, and a second extension portion 314 extending from the other side of the coiled portion 310.

The first extension portion 312 may be coupled to the spring coupling portion 101. The second extension portion 314 may be coupled to the tub 20. The tub 20 may be provided with a spring coupling portion 202 to which the second extension portion 314 is coupled.

The first coupling portion 210 may be positioned higher than the spring coupling portion 202 in the tub 20.

The damping unit 40 may be connected to the first extension portion 312 or the second extension portion 314.

For example, FIG. 3 illustrates that the damping unit 40 is connected to the first extension portion 312. The second connector 60 may be connected to the first extension portion 312.

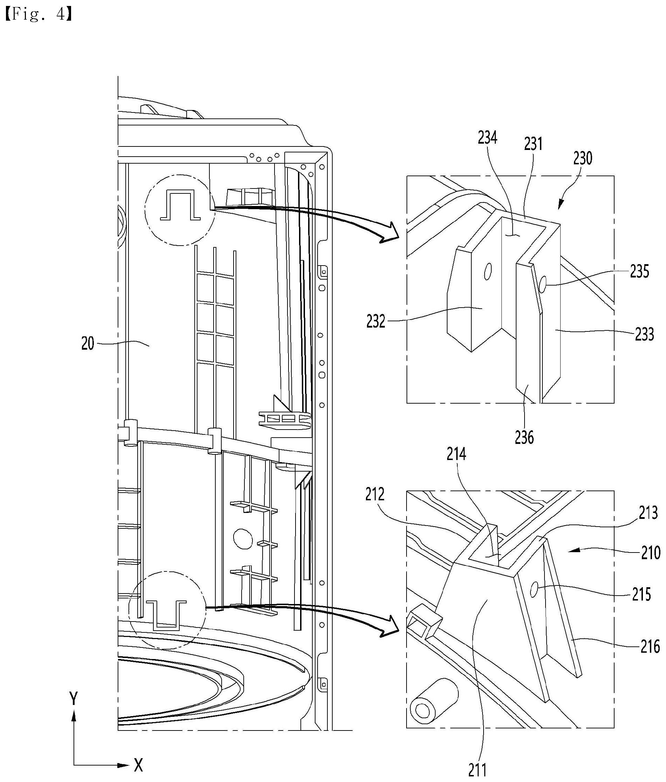

FIG. 4 is a view showing an upper structure of a tub according to the first embodiment.

Referring to FIG. 4, the tub 20 may include a first coupling portion 210. The first coupling portion 210 may be positioned adjacent to a front end of the tub 20. The front end of the tub 20 may be an end adjacent to the opening 251 of the drum 25.

The tub 20 may further include a second coupling portion 230. The second coupling portion 230 may be disposed to be spaced apart from the first coupling portion 210 in the Y-axis direction. For example, the second coupling portion 230 may be positioned adjacent to a rear end of the tub 20.

The second coupling portion 230 may be positioned higher than the spring coupling portion 202 in the tub 20. The first coupling portion 210 and the second coupling portion 230 may be collectively referred to as a damping unit coupling portion.

As in the present embodiment, when a single damping unit 40 is provided, the damping unit 40 may be connected to the first coupling portion 210 or connected to the second coupling portion 230.

Vibration reduction characteristics when the damping unit 40 is connected to the first coupling portion 210 and when the damping unit 40 is connected to the second coupling portion 230 may be different. The connection position of the damping unit 40 may differ depending on the type of the laundry treatment apparatus 1. For example, the connection position of the damping unit 40 may differ depending on an inclination angle, arrangement, capacity, shape, etc. of the drum 30 within the tub 20.

When the damping unit 40 is connected to the first coupling portion 210, an effect of reducing vibration generated at a front side of the tub 20 may be increased. When the damping unit 40 is connected to the second coupling portion 230, an effect of reducing vibration generated at a rear side of the tub 20 may be increased.

The first coupling portion 210 may include a first wall 211 extending upward from the tub 20, and a second wall 212 and a third wall 213 extending from the first wall 211 in a direction crossing the first wall 211.

The second wall 212 and the third wall 213 may be spaced apart from each other and may extend upward from the tub 20. The second wall 212 and the third wall 213 may extend from the first wall 211 toward a rear side. Accordingly, the first coupling portion 210 may include an upper opening and a rear opening.

Since the second wall 212 and the third wall 213 are spaced apart from each other, a first space 214 in which the first connector 50 is positioned may be provided between the second wall 212 and the third wall 213.

A first hole 215 may be formed in each of the second wall 212 and the third wall 213. In order to reinforce the strength of the first coupling portion 210, one or more strength reinforcing walls 216 may be formed on one or more of the second wall 212 and the third wall 213.

The second coupling portion 230 may include a first wall 231 extending upward from the tub 20, and a second wall 232 and a third wall 233 extending from the first wall 231 in a direction crossing the first wall 231.

The second wall 232 and the third wall 233 may be spaced apart from each other and may extend upward from the tub 20. The second wall 232 and the third wall 233 may extend from the first wall 231 toward a front side. That is, the second wall 232 and the third wall 233 may extend from the first wall 231 toward the first coupling portion 210.

Accordingly, the second coupling portion 230 may include an upper opening and a front opening.

Since the second wall 232 and the third wall 233 are spaced apart from each other, a second space 234 in which the first connector 50 is positioned may be provided between the second wall 232 and the third wall 233.

A second hole 235 may be formed in each of the second wall 232 and the third wall 233. In order to reinforce the strength of the second coupling portion 230, one or more strength reinforcing walls 236 may be formed on one or more of the second wall 232 and the third wall 233.

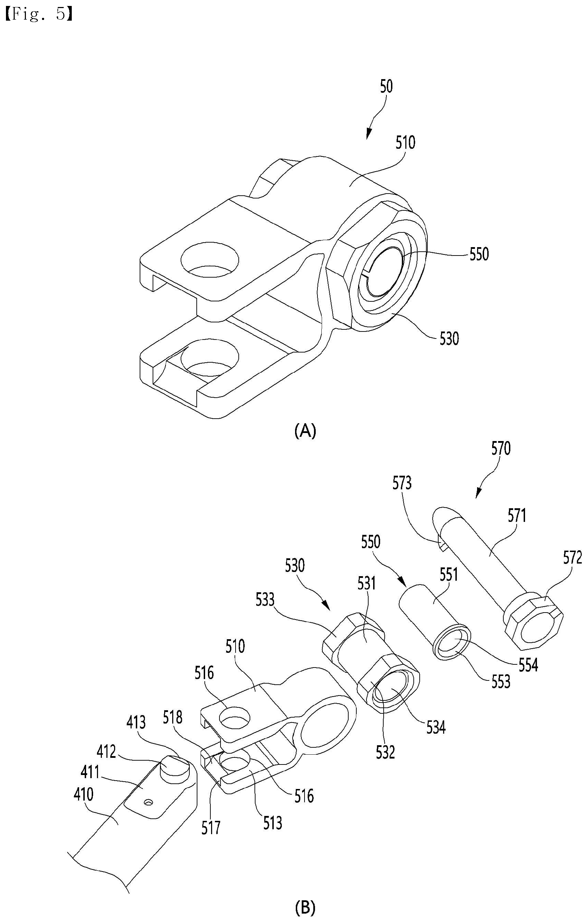

FIG. 5(A) is a perspective view of a first connector according to the first embodiment, and FIG. 5(B) is an exploded perspective view of the first connector of the first embodiment.

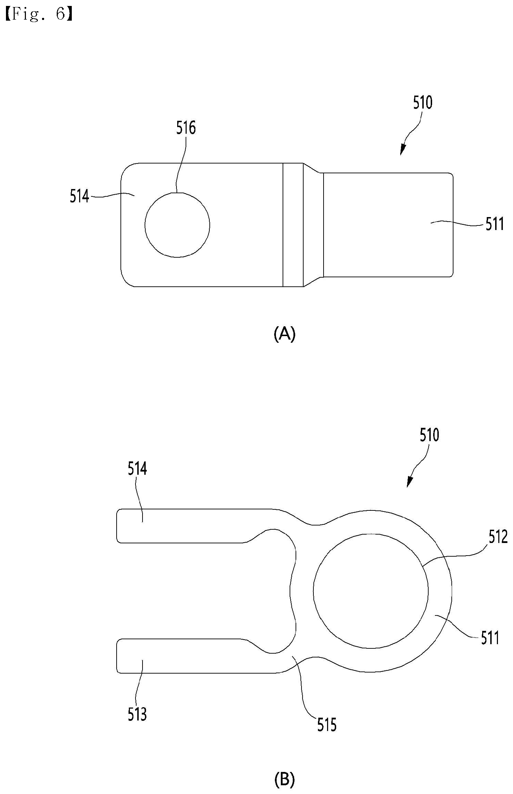

FIG. 6(A) is a plan view of a first connector body according to the first embodiment, and FIG. 6(B) is a side view of the first connector body of the first embodiment.

Referring to FIGS. 5 and 6, the first connector 50 may include a first connector body 510.

The first body 410 of the damping unit 40 may be connected to the first connector body 510.

The first connector body 510 may include a first portion 511. The first portion 511 may be formed, for example, in a cylindrical shape including a hole 512.

The first connector body 510 may include a second portion 513 and a third portion 514 extending from the first portion 511. The first body 410 of the damping unit 40 may be coupled to the second portion 513 and the third portion 514.

Accordingly, the second portion 513 and the third portion 514 may be referred to as a damping unit connecting portion.

The second portion 513 may extend from one point of the first portion 511. The third portion 514 may extend from another point of the first portion 511.

The second portion 513 and the third portion 514 may be disposed to be spaced apart from each other. The second portion 513 and the third portion 514 may be disposed to face each other.

A portion of the third portion 514 may be parallel to the second portion 513.

Each of the second portion 513 and the third portion 514 may include a coupling hole 516.

The first body 410 of the damping unit 40 may include a first connector coupling portion 411. The first connector coupling portion 411 may be rotatably connected to the second portion 513 and the third portion 514.

The first connector coupling portion 411 may be inserted into a space between the second portion 513 and the third portion 514. The first connector coupling portion 411 may include a coupling protrusion 412 to be coupled to the coupling hole 516.

When a portion of the first connector coupling portion 411 is inserted into the space between the second portion 513 and the third portion 514, the coupling protrusion 412 may be inserted into the coupling hole 516.

In this embodiment, in order for the coupling protrusion 412 to be easily coupled to the coupling hole 516, a neck portion 515 may be provided at one or more of a connecting portion between the second portion 513 and the first portion 511, and a connecting portion between the third portion 514 and the first portion 511. A thickness of the neck portion 515 may be smaller than a thickness of the second portion 513 and the third portion 514.

In the process of the first connector coupling portion 411 being inserted into the space between the second portion 513 and the third portion 514, one or more of the second portion 513 and the third portion 514 may be deformed in a direction away from each other by the neck portion 515. When the coupling protrusion 412 of the first body 410 is aligned with the coupling hole 516, one or more of the second portion 513 and the third portion 514 may return to their original shape.

Each of the second portion 513 and the third portion 514 may include a recessed portion 517 for guiding insertion of the coupling protrusion 412. The recessed portion 517 may be formed at an end of each of the second portion 513 and the third portion 514.

The recessed portion 517 may include an inclined surface 518. A recess depth of the recessed portion 517 may decrease from the ends of the second portion 513 and the third portion 514 toward the coupling hole 516, by the inclined surface 518.

When the coupling protrusion 412 is aligned with the recessed portion 517 and the coupling protrusion 412 is moved within the recessed portion 517 toward the coupling hole 516, the coupling protrusion 412 may be inserted into the coupling hole 516.

The coupling protrusion 412 may be provided with an inclined surface 413 for allowing the coupling protrusion 412 to be easily inserted into the recessed portion 517.

The first connector 50 may further include a bushing 530 coupled to the first portion 511. The bushing 530 may be formed of a material deformable by external force.

The bushing 530 may include a first part 531 accommodated in the hole 512, and a second part 532 and a third part 533 provided on both sides of the first part 531. A diameter of the first part 531 may be equal to or smaller than a diameter of the hole 512.

Diameters of the second part 532 and the third part 533 may be larger than the diameters of the first part 531 and the hole 512.

The bushing 530 may include a slot 534.

The first connector 50 may further include a pin guide 550 coupled to the bushing 530.

The pin guide 550 may be inserted into the slot 534 of the bushing 530. The pin guide 550 may include a first section 551 and a second section 553 provided on one side of the first section 551.

A diameter of the second section 553 may be larger than a diameter of the first section 551. The diameter of the second section 553 may be larger than a diameter of the slot 534.

The first section 551 may be inserted into the slot 534, and the second section 553 may be positioned outside the slot 534.

The pin guide 550 may include a through hole 554.

The first connector 50 may further include a pin 570 passing through the through hole 554 of the pin guide 550.

The pin 570 may include a body portion 571 and a hook 573 positioned on one side of the body portion 571. The pin 570 may include a head portion 572 positioned on the other side of the body portion 571.

Referring to FIGS. 3 to 6, in a state in which the bushing 530 is coupled to the first connector body 510 and the pin guide 550 is inserted into the bushing 530, the first connector body 510 may be inserted into the first space 214 of the first coupling portion 210.

When the first connector body 510 is inserted into the first space 214, the through hole 554 of the pin guide 550 may be aligned with the first holes 215 of the second wall 212 and the third wall 213.

The pin 570 may be coupled from a side of either the second wall 212 or the third wall 213.

For example, the pin 570 may be coupled so as to pass through the first hole 215 of the third wall 213, then pass through the through hole 554 of the pin guide 550, and then pass through the first hole 215 of the second wall 212.

Even when the first connector 50 is coupled to the second coupling portion 230, it may be coupled in the same manner as the manner of being coupled to the first coupling portion 210.

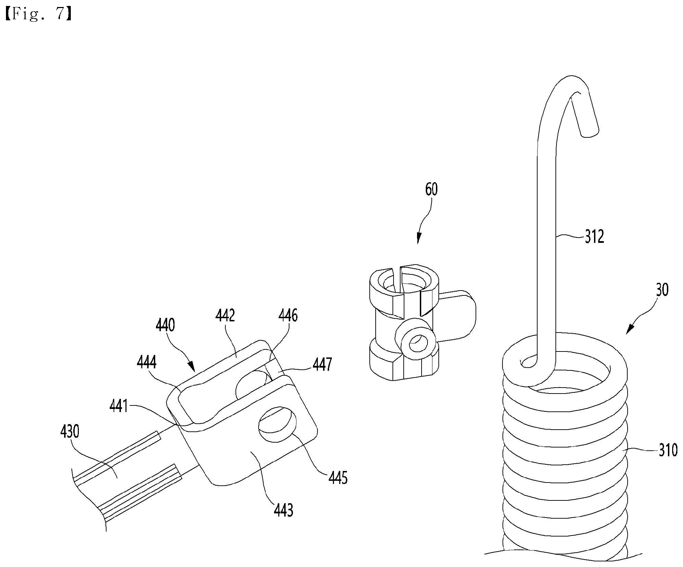

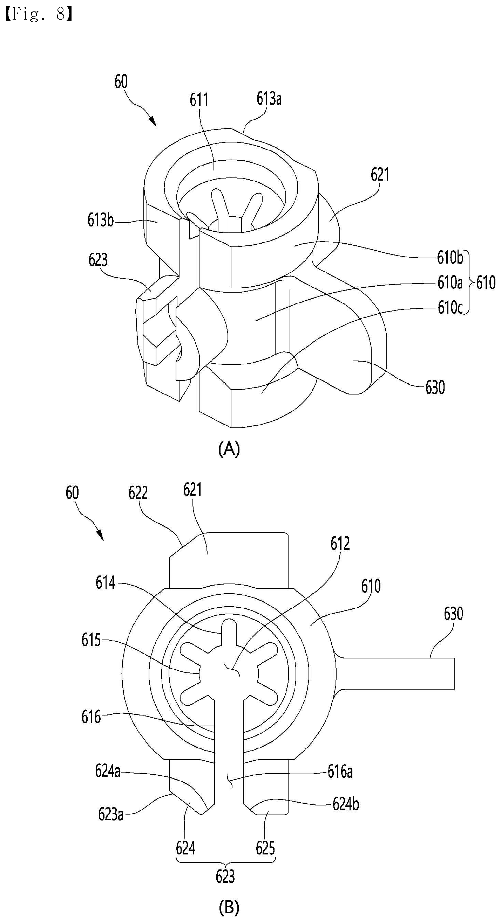

FIG. 7 is a perspective view showing a spring, a second connector, and a second body according to the first embodiment. FIG. 8(A) is a perspective view of a second connector of the first embodiment, and FIG. 8(B) is a plan view of the second connector of the present embodiment.

Referring to FIGS. 7 and 8, the second body 430 of the damping unit 40 may include a second connector coupling portion 440.

The second connector coupling portion 440 may include a first member 441. The second connector coupling portion 440 may include a second member 442 and a third member 443 extending from the first member 441.

The second connector 60 may be coupled to the second member 442 and the third member 443.

The second member 442 may extend from one point of the first member 441. The third member 443 may extend from another point of the first member 441.

The second member 442 and the third member 443 may be disposed to be spaced apart from each other. The second member 442 and the third member 443 may be disposed to face each other.

At least a portion of the third member 443 may be parallel to the second member 442.

Each of the second member 442 and the third member 443 may include a coupling hole 445.

A portion of the second connector 60 may be inserted into a space between the second member 442 and the third member 443.

A neck portion 444 may be provided at one or more of a connecting portion between the second member 442 and the first member 441, and a connecting portion between the third member 443 and the first member 441. A thickness of the neck portion 444 may be smaller than a thickness of the second member 442 and the third member 443.

The second connector 60 may include first and second coupling portions 621, 623 inserted into the coupling holes 445.

Each of the second member 442 and the third member 443 may include a recessed portion 446 for guiding insertion of each of the coupling portions 621, 623. The recessed portion 446 may be formed at an end of each of the second member 442 and the third member 443.

The recessed portion 446 may include an inclined surface 447. A recess depth of the recessed portion 446 may decrease from the ends of the second member 442 and the third member 443 toward the coupling hole 445, by the inclined surface 447.

The second connector 60 may include a second connector body 610.

The second connector body 610 may include an accommodating space 612 in which the first extension portion 312 or the second extension portion 314 of the spring 30 is accommodated. The accommodating space 612 may pass through the second connector body 610 in a longitudinal direction.

The second connector body 610 may include one or more slots 614 extending outward from an inner surface 615 forming the accommodating space 612. For example, a plurality of slots 614 may be disposed to be spaced apart from each other in a circumferential direction.

In the case of this embodiment, as the plurality of slots 614 are formed, a contact area between the inner surface 615 and the first extension portion 312 may be reduced. Accordingly, friction between the first extension portion 312 and the second connector 60 may be reduced in the process of the second connector 60 moving along the first extension portion 312.

The second connector body 610 may further include a guide slot extending in a radial direction from the accommodating space 612. The guide slot may guide the first extension portion 312 into the accommodating space 612 when the first extension portion 312 and the second connector 60 are coupled.

The guide slot may include a first slot 616a. The first slot 616a is an entry slot for entry of the first extension portion 312. The first slot 616a may be formed by, or formed to pass through, a second coupling portion 623 which will be described later.

The guide slot may further include a second slot 616 for guiding the first extension portion 312, which has entered through the first slot 616a, into the accommodating space 612.

Meanwhile, the second connector body 610 may include a first portion 610a, and a second portion 610b and a third portion 610c positioned on both sides of the first portion 610a.

Based on FIG. 8, the second portion 610b may be positioned above the first portion 610a, and the third portion 610c may be positioned below the first portion 610a.

A diameter of each of the second portion 610b and the third portion 610c may be larger than a diameter of the first portion 610a.

The second connector body 610 may include a first surface 613a facing the second member 443 of the second connector coupling portion 440, and a second surface 613b facing the third member 443 of the second connector coupling portion 440. Each of the first surface 613a and the second surface 613b may include a flat surface.

The second connector 60 may further include a first coupling portion 621 and a second coupling portion 623 to be coupled to the second connector coupling portion 440.

The second coupling portion 623 may be positioned opposite to the first coupling portion 621 in the second connector body 610.

The first coupling portion 621 and the second coupling portion 623 may extend from the first portion 610a.

The first coupling portion 621 may be inserted into the hole 445 of the second member 442, and the second coupling portion 623 may be inserted into the hole 445 of the third member 443.

In order for the first coupling portion 621 to be easily inserted into the hole 445 of the second member 442, the first coupling portion 621 may include an inclined surface 622. In the process of the second connector 60 being coupled to the second connector coupling portion 440, the inclined surface 622 may come into contact with the inclined surface 447 of the second member 442.

The second coupling portion 623 may be divided into a first part 624 and a second part 625. The first part 624 and the second part 625 may be spaced apart from each other. The first slot 616a may be formed between the first part 624 and the second part 625.

In order for the second coupling portion 623 to be easily inserted into the hole 445 of the third member 443, the second coupling portion 623 may include an inclined surface 623a. For example, the inclined surface 623a may be formed on the first part 624.

The second coupling portion 623 may be provided with inclined surfaces 624a, 624b for facilitating entry of the first extension portion 312. For example, a first inclined surface 624a may be provided on the first part 624, and a second inclined surface 624b may be provided on the second part 625. An entrance width of the first slot 616a may be increased by the inclined surfaces 624a, 624b.

For example, the first inclined surface 624a and the second inclined surface 624b may be inclined such that a gap therebetween increases with increasing distance from the second slot 616.

The second connector 60 may further include a handle 630. A user may grip the handle 630 to couple the second connector 60 to the first extension portion 312.

A recessed portion 611 may be provided on at least one of an upper side and a lower side of the second connector 60. The recessed portion 611 may reduce the weight of the second connector 60. The recessed portion 611 may allow another component to be coupled thereto.

For example, the recessed portion 611 may be provided on each of the second portion 610b and the third portion 610c.

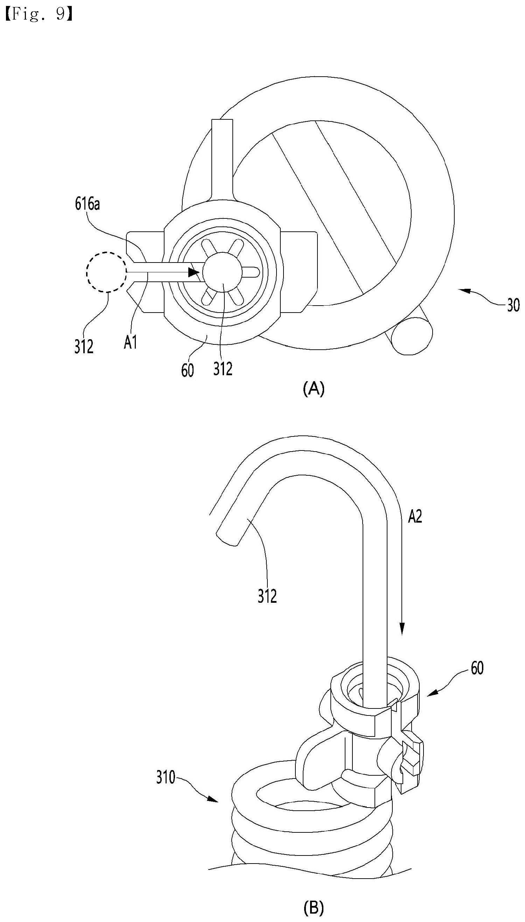

FIG. 9(A) is a view showing an example in which a second connector and a spring are coupled according to the first embodiment, and FIG. 9(B) is a view showing a modified example in which the second connector and the spring are coupled.

First, referring to FIGS. 8 and 9(A), in order to couple the first extension portion 312 and the second connector 60, the first extension portion 312 may be inserted into the guide slot and positioned in the accommodating space 612.

A diameter of the first extension portion 312 may be larger than a width of the first slot 616a and a width of the second slot 616.

Since the first slot 616a is formed between the first part 624 and the second part 625, in the process of inserting the first extension portion 312 into the first slot 616a as indicated by arrow A1, the first part 624 and the second part 625 may move in a direction away from each other, so that the width of the first slot 616a may be increased.

Since the inclined surfaces 624a, 624b are formed on the first part 624 and the second part 625, respectively, the first extension portion 312 may be easily introduced into the first slot 616a.

When the first extension portion 312, having entered the first slot 616a, is moved toward the second slot 616, the width of the second slot 616 may also be increased, so that the first extension portion 312 may pass through the second slot 616 and move into the accommodating space 612.

When the first extension portion 312 is moved into the accommodating space 612, the widths of the first part 624 and the second part 625 may return to their original widths. In a state in which the first extension portion 312 is accommodated in the accommodating space 612, separation of the first extension portion 312 from the second connector 60 through the guide slot may be restricted.

As another example, referring to FIG. 9(B), it is also possible to directly insert an end of the first extension portion 312 into the accommodating space 612 of the second connector 60.

For example, after aligning the end of the first extension portion 312 with a lower side of the accommodating space 612 in the second connector 60, the end of the first extension portion 312 may be inserted into the accommodating space 612 of the second connector 60. Then, when the second connector 60 is moved in the longitudinal direction of the first extension portion 312 as indicated by arrow A2, the coupling of the first extension portion 312 and the second connector 60 may be completed.

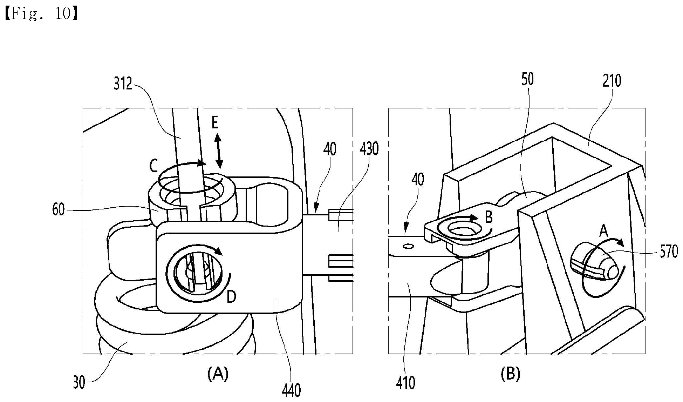

FIG. 10(A) is a view showing degrees of freedom of a damping unit in a state in which the damping unit according to the first embodiment is connected to a first coupling portion by a first connector, and FIG. 10(B) is a view showing degrees of freedom of the damping unit in a state in which the damping unit according to the first embodiment is connected to a spring by a second connector.

Referring to FIGS. 5 to 10, the first connector 50 may be rotated about the pin 570 (see arrow A). Accordingly, the damping unit 40 connected to the first connector 50 may also be rotated about the pin 570. The pin 570 may provide a first rotation center.

The damping unit 40 may be rotated relative to the first connector 50. For example, in a state in which the coupling protrusion 412 of the first connector coupling portion 411 is inserted into the coupling hole 516 of the first connector 50, the first connector coupling portion 411 may be rotated about the coupling protrusion 412. Accordingly, the damping unit 40 connected to the first connector 50 may be rotated about the coupling protrusion 412 (see arrow B). The coupling protrusion 412 may provide a second rotation center.

Accordingly, the first body 410 connected to the first connector 50 may have two directions of freedom with respect to the tub 20.

The second connector 60 connected to the first extension portion 312 may be rotated about the first extension portion 312 (see arrow C). The first extension portion 312 may provide a rotation center.

The damping unit 40 may be rotated relative to the second connector 60. For example, in a state in which the coupling portions 621, 623 of the second connector 60 are coupled to the coupling holes 445 of the second connector coupling portion 440, the second connector coupling portion 440 may be rotated about the coupling portions 621, 623. Accordingly, the damping unit 40 connected to the second connector 60 may be rotated about the coupling portions 621, 623 (see arrow D). The coupling portions 621, 623 may provide a third rotation center.

The second connector 60 connected to the first extension portion 312 may also move in the longitudinal direction of the first extension portion 312 (see arrow E).

In addition, as described above, the damping unit 40 itself is configured such that relative movement of the first body 410 and the second body 430 is possible.

According to this embodiment, there is an advantage in that vibration of the tub 20 can be effectively reduced by the damping unit 40 through multi-directional degrees of freedom of the damping unit 40.

When the drum 25 within the tub 20 rotates, vibration may be transmitted to the tub 20.

When the drum 25 rotates at a low speed, vibration may be reduced by the damping force of the damping unit 40 itself. Through vibration reduction, collision of the tub 20 against a side surface of the cabinet 10 may be restricted.

In addition, since the damping unit 40 is connected to the spring 30, transmission of vibration to the cabinet 10 may be reduced.

When the drum 25 rotates at a high speed, vibration may be reduced by the multi-directional degrees of freedom provided by the damping unit 40 and the connectors 50, 60, and collision of the tub 20 against the side surface of the cabinet 10 may be restricted.

In addition, since the damping unit 40 is connected to the spring 30, transmission of vibration to the cabinet 10 may be reduced.

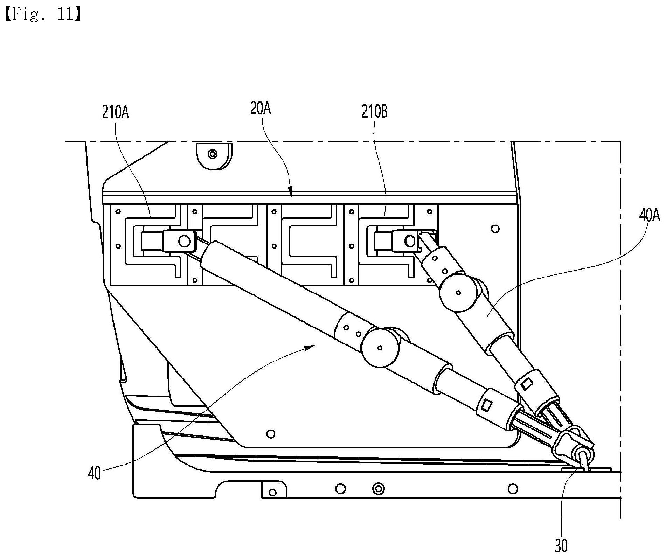

FIG. 11 is a view showing a state in which a damping unit according to a second embodiment is installed on a tub.

This embodiment is the same as the first embodiment in other respects, except that a coupling position or number of damping units on the tub can be adjusted. Accordingly, only the characteristic parts of this embodiment will be described below.

Referring to FIG. 11, the tub 20 may include a coupling mechanism 20A for coupling the damping unit 40. The coupling mechanism 20A may be coupled to the tub 20 as a separate component from the tub 20, or may be formed integrally with the tub 20.

The coupling mechanism 20A may include a plurality of coupling portions 210A, 210B. The plurality of coupling portions 210A, 210B may, for example, be arranged in a line. The shape of each of the coupling portions 210A, 210B may be the same as or similar to the shape of the first coupling portion described with reference to FIG. 4.

Referring also to FIG. 4, the coupling mechanism 20A may be coupled adjacent to a front end side of the tub 20. The plurality of coupling portions 210A, 210B may, for example, be arranged in a forward-backward direction (Y-axis direction) of the tub 20.

Depending on the type of the laundry treatment apparatus 1, one side of a single damping unit 40 may be connected to the spring 30, and the other side may be coupled to one coupling portion among the plurality of coupling portions 210A, 210B.

Depending on the position at which the other side of the damping unit 40 is coupled, vibration reduction characteristics by the damping unit 40 may vary.

Alternatively, as shown in FIG. 11, it is also possible to connect a plurality of damping units 40, 40A to the tub 20. For example, it is possible to connect one damping unit 40 to one coupling portion 210A among the plurality of coupling portions 210A, 210B, and to connect an additional damping unit 40 to the other coupling portion 210B among the plurality of coupling portions 210A, 210B.

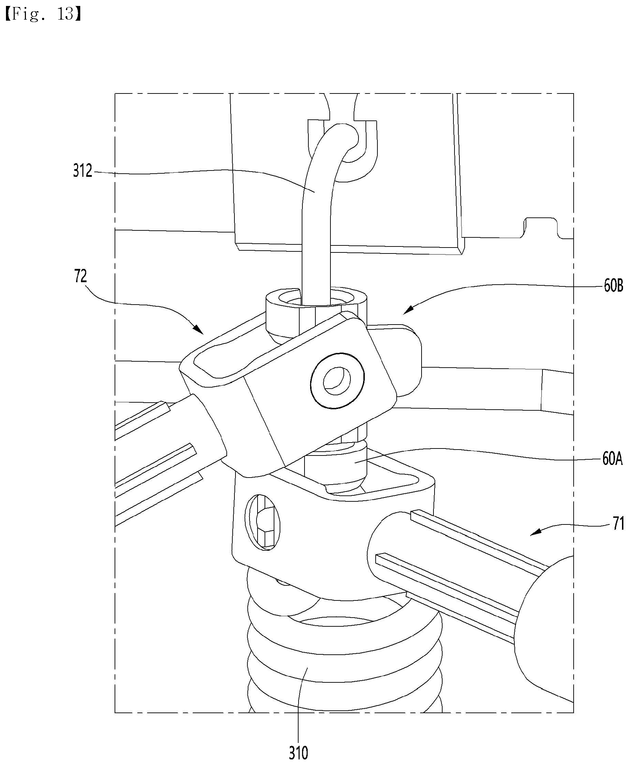

In this case, the plurality of damping units 40, 40A may be connected to the spring 30, and the connection state thereof may be referred to FIG. 13, which will be described later.

As another example, it is also possible for the coupling mechanism to be coupled adjacent to a rear end side of the tub 20. That is, it is also possible for a coupling mechanism provided with a plurality of the second coupling portions described in FIG. 4 to be coupled to the tub.

Further, it is also possible for a first coupling mechanism having a plurality of first coupling portions to be installed at a front side of the tub, and a second coupling mechanism having a plurality of second coupling portions to be installed at a rear side of the tub.

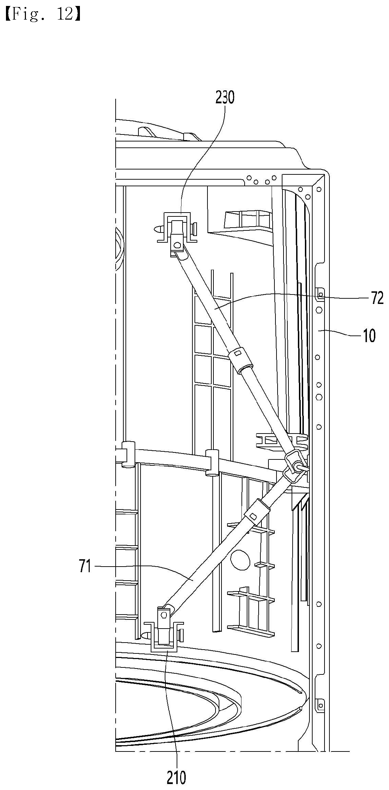

FIG. 12 is a plan view showing a state in which a first damping unit and a second damping unit according to a third embodiment are installed on a tub, and FIG. 13 is a view showing a state in which the first damping unit and the second damping unit according to the third embodiment are connected to a spring.

This embodiment is the same as the first embodiment or the second embodiment in other respects, and is characterized in that a plurality of damping units reduce vibration of the tub. Hereinafter, only the characteristic parts of this embodiment will be described, and for the same configurations as the first embodiment, the reference numerals and description of the first embodiment will be used as they are.

Referring to FIGS. 12 and 13, a first damping unit 71 may be connected to the first coupling portion 210 of the tub 20, and a second damping unit 72 may be connected to the second coupling portion 230 of the tub 20.

The first damping unit 71 and the second damping unit 72 may be connected to the first extension portion 312 of the spring 30 in an up-down direction.

For example, a second connector 60A for the first damping unit 71 and a second connector 60B for the second damping unit 72 may be connected to the first extension portion 312 in the up-down direction.

Even in this case, the plurality of second connectors 60A, 60B may move in the longitudinal direction of the first extension portion 312 or may be rotatable about the first extension portion 312, and the plurality of damping units 71, 72 may reduce vibration without interference with each other.

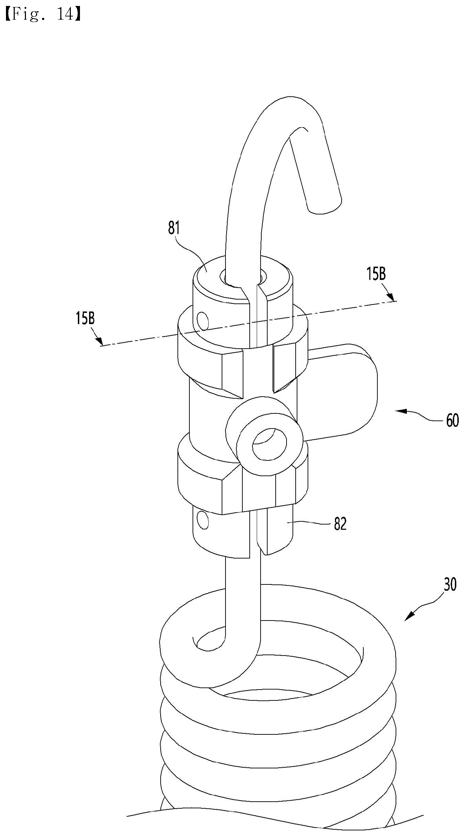

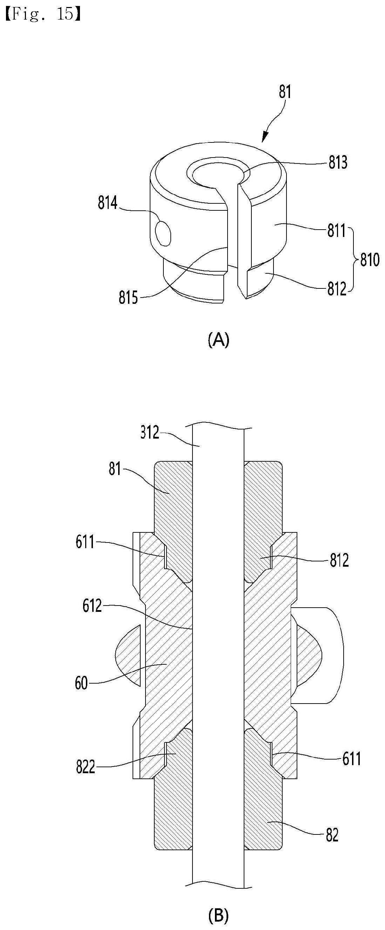

FIG. 14 is a view showing a state in which a movement restricting portion is connected to a second connector according to a fourth embodiment, FIG. 15(A) is a view showing the movement restricting portion according to the fourth embodiment, and FIG. 15(B) is a cross-sectional view taken along line 15B-15B of FIG. 14.

This embodiment is the same as the previous embodiments in other respects, except that a movement restricting portion for restricting movement of the second connector in one direction is additionally provided. Accordingly, only the characteristic parts of this embodiment will be described below, and for the same configurations as the first embodiment, the reference numerals and description of the first embodiment will be used as they are.

Referring to FIGS. 10, 14, and 15, the second connector 60 may move up and down along the first extension portion 312 (see arrow E).

Depending on the type of the laundry treatment apparatus 1, it may be necessary to restrict the second connector 60 from moving up and down along the first extension portion 312.

In the case of this embodiment, in order to restrict the up-down movement of the second connector 60, movement restricting portions 81, 82 may be connected to the second connector 60.

The movement restricting portions 81, 82 may include a first restricting portion 81 connected to an upper side of the second connector 60, and a second restricting portion 82 connected to a lower side of the second connector 60.

In this embodiment, since the shapes of the first restricting portion 81 and the second restricting portion 82 may correspond to each other, only the shape of the first restricting portion 81 will be described below.

The first restricting portion 81 may be connected to the second connector 60 while being coupled to the first extension portion 312.

The first restricting portion 81 may include a body 810 forming an accommodating space 813. The first extension portion 312 may be accommodated in the accommodating space 813.

The body 810 may include a first body 811 and a second body 812 extending from the first body 811. An outer diameter of the second body 812 may be smaller than an outer diameter of the first body 811.

The second body 812 may be inserted into the recessed portion 611 of the second connector body 610.

For example, the second body 812 of the first restricting portion 81 may be inserted into the recessed portion 611 from an upper side of the second connector body 610. A second body 822 of the second restricting portion 82 may be inserted into the recessed portion 611 from a lower side of the second connector body 610.

The first restricting portion 81 may be provided with a fastening hole 814 into which a bolt (not shown) is fastened, so as to restrict movement of the first restricting portion 81 relative to the first extension portion 312. The fastening hole 814 may, for example, be provided in the first body 811. The bolt may pass through the fastening hole 814 and be coupled to the first extension portion 312, or may press against the first extension portion 312.

Since the movement restricting portion is detachably connected to the second connector 60, there is an advantage in that the movement restricting portion can be additionally connected as needed, or a connected movement restricting portion can be easily detached.

Alternatively, it is also possible to restrict upward or downward movement of the second connector 60 using only one restricting portion among the plurality of restricting portions.

Meanwhile, in the above embodiments, a case in which two or more damping units are connected to a single spring has been described as an example, but alternatively, it is also possible for a first damping unit to be connected to a first spring and a second damping unit to be connected to a second spring.

Alternatively, it is also possible for the first damping unit to be connected to one extension portion among the first extension portion and the second extension portion of the spring, and for the second damping unit to be connected to the other extension portion among the first extension portion and the second extension portion of the spring.

## Claims

1. A laundry treatment apparatus comprising:
a cabinet;
a tub disposed inside the cabinet;
a spring connecting the cabinet and the tub such that the tub is supported by the cabinet; and
a damping unit connecting the cabinet and the spring to reduce vibration.

2. The laundry treatment apparatus of claim 1,
wherein the tub comprises:
a damping unit coupling portion to which the damping unit is coupled; and
a spring coupling portion to which the spring is coupled.

3. The laundry treatment apparatus of claim 2,
further comprising a first connector connecting the damping unit to the damping unit coupling portion.

4. The laundry treatment apparatus of claim 3,
wherein the damping unit coupling portion comprises a first wall extending from the tub, and a second wall and a third wall extending from the first wall,
wherein the second wall and the third wall are disposed to be spaced apart from each other to form a space, and
wherein the first connector is coupled to the second wall and the third wall between the second wall and the third wall.

5. The laundry treatment apparatus of claim 3,
wherein the first connector is connected to the damping unit coupling portion so as to be rotatable about a first rotation center, and
wherein the damping unit is connected to the first connector so as to be rotatable about a second rotation center.

6. The laundry treatment apparatus of claim 3,
wherein the damping unit comprises:
a first body connected to the first connector; and
a second body movably connected to the first body and connected to the spring.

7. The laundry treatment apparatus of claim 6,
wherein the first connector comprises a first portion connected to the damping unit coupling portion, and a second portion and
a third portion extending from the first portion and spaced apart from each other, and
wherein the first body comprises a first connector coupling portion rotatably coupled to the second portion and the third portion.

8. The laundry treatment apparatus of claim 2,
further comprising a second connector for connecting the damping unit to the spring.

9. The laundry treatment apparatus of claim 8,
wherein the damping unit is connected to the second connector so as to be rotatable about a third rotation center.

10. The laundry treatment apparatus of claim 8, wherein the spring comprises:
a coiled portion in which a wire is wound a plurality of times;
a first extension portion extending from one side of the coiled portion and coupled to the cabinet; and
a second extension portion extending from the other side of the coiled portion and coupled to the spring coupling portion of the tub,
wherein the second connector is connected to either the first extension portion or the second extension portion.

11. The laundry treatment apparatus of claim 10,
wherein the second connector is rotatably connected to the first extension portion or the second extension portion, and is movable in a longitudinal direction of the first extension portion or the second extension portion while connected to the first extension portion or the second extension portion.

12. The laundry treatment apparatus of claim 10,
wherein the second connector is rotatably connected to the first extension portion or the second extension portion, and
further comprising a movement restricting portion connected to the first extension portion or the second extension portion and the second connector, so as to restrict movement of the second connector in the longitudinal direction of the first extension portion or the second extension portion.

13. The laundry treatment apparatus of claim 10,
wherein the second connector comprises a connector body forming an accommodating space in which the first extension portion or the second extension portion is accommodated.

14. The laundry treatment apparatus of claim 13,
wherein the second connector further comprises a guide slot for guiding the first extension portion or the second extension portion into the accommodating space.

15. The laundry treatment apparatus of claim 13,
wherein the damping unit comprises a first body connected to the damping unit coupling portion, and a second body movably connected to the first body and connected to the spring, and
wherein the second body comprises a second connector coupling portion to be coupled to the second connector.

16. The laundry treatment apparatus of claim 15,
wherein the second connector comprises a first coupling portion and a second coupling portion extending from the connector body, and
wherein the second connector coupling portion is rotatably connected to the first coupling portion and the second coupling portion.

17. The laundry treatment apparatus of claim 1, wherein the tub comprises a coupling mechanism provided with a plurality of coupling portions, and
wherein the damping unit is coupled to one coupling portion among the plurality of coupling portions.

18. The laundry treatment apparatus of claim 1,
wherein the tub comprises a coupling mechanism provided with a plurality of coupling portions, and
wherein the damping unit comprises a first damping unit coupled to one coupling portion among the plurality of coupling portions and to the spring, and a second damping unit coupled to another coupling portion among the plurality of coupling portions.

19. The laundry treatment apparatus of claim 1, wherein the tub comprises a first coupling portion, and a second coupling portion spaced apart from the first coupling portion in a front-rear direction, and
wherein the damping unit comprises a first damping unit connected to the first coupling portion and the spring, and a second damping unit connected to the second coupling portion and the spring.

20. The laundry treatment apparatus of claim 1,
further comprising a lower damping unit connecting a base of the cabinet and a lower side of the tub.
